# EUROPÄISCHE PATENTANMELDUNG

(11) **EP 2 740 962 A2**
(43) Veröffentlichungstag der Anmeldung: **11.06.2014**
(21) Anmeldenummer: 13195514.8
(22) Anmeldetag: 03.12.2013
(51) Int. Cl.: F16F 1/373, B60R 16/02, H02G 3/32

(54) **Schwingungsdämpfer**

(30) Priorität: 06.12.2012 DE 102012111866
(71) Anmelder: TRW Automotive Electronics & Components GmbH, 78315 Radolfzell (DE)
(72) Erfinder: Loewe, Hubert, 66919 Weselberg (DE); Hofmann, Jürgen, 67304 Eisenberg (DE); Elsner, Markus, 67657 Kaiserslautern (DE)
(74) Vertreter: Prinz & Partner

(57) **Zusammenfassung**

Bei einem Schwingungsdämpfer (10) für zumindest eine Leitung (12, 12a, 12b), insbesondere in einem Fahrzeug, mit zumindest einer Aufnahme (14, 14a, 14b), in der eine Leitung (12, 12a, 12b) gehalten werden kann, und einem Rahmen (16), in dem die Aufnahme (14, 14a, 14b) gehalten ist und der die Aufnahme (14, 14a, 14b) in Umfangsrichtung (U) umschließt, ist vorgesehen, dass der Rahmen (16) flexibel ausgebildet ist und/oder dass flexible Stege (18a, 18b, 18c, 18d, 18e, 18f) vorgesehen sind, die die Aufnahme (14, 14a, 14b) beabstandet vom Rahmen (16) halten.

## Beschreibung

Die Erfindung betrifft einen Schwingungsdämpfer für zumindest eine Leitung, insbesondere in einem Fahrzeug, mit zumindest einer Aufnahme, in der eine Leitung gehalten werden kann, und einem Rahmen, in dem die Aufnahme gehalten ist und der die Aufnahme in Umfangsrichtung umschließt.

Um Leitungen, beispielsweise Kabel, in Fahrzeugen zu verlegen, sind Leitungshalter vorgesehen, die die Leitungen in regelmäßigen Abständen fahrzeugfest halten. Zwischen solchen Leitungshalter kann die Leitung aber unter Umständen frei schwingen, wodurch die Leitung an der Fahrzeugkarosserie anschlagen kann. Dies kann zu einer unerwünschten Geräuschbildung oder zu Beschädigungen führen. Die Reduzierung der Abstände der Leitungshalter, um ein Aufschwingen der Leitungen zu verhindern, ist aber häufig nicht möglich oder aus Kostengründen nicht sinnvoll.

Um die Geräuschbildung beim Schwingen dieser Leitungen zu reduzieren, sind deshalb auf den Leitungen zwischen den Leitungshalter Schwingungsdämpfer vorgesehen, die zum einen durch die Erhöhung der Masse der Leitung eine Veränderung des Schwingungsverhaltens bewirken. Zum anderen sind diese Schwingungsdämpfer aus einem weichen Material hergestellt, wodurch das Anschlagen der Leitung an einem festen Gegenstand, beispielsweise der Fahrzeugkarosserie, gedämpft werden kann.

Üblicherweise werden solche Schwingungsdämpfer aus Zweikomponentenkunststoff hergestellt, mit einer Aufnahme für die Leitung aus einem harten Kunststoff, in dem die Leitung sicher gehalten werden kann. Zur Dämpfung wird diese Aufnahme mit einem weichen Kunststoff umspritzt, der ein gutes Dämpfungsverhalten aufweist. Die Herstellung solcher Schwingungsdämpfer ist aber sehr teuer und aufwendig.

Merkmal eines erfindungsgemäßen Schwingungsdämpfers ist, dass er keinerlei Vorrichtung zur Befestigung an einem anderen Bauteil als der Leitung(en) aufweist, also insbesondere keine Befestigungslaschen oder -öffnungen, durch die hindurch sich Befestigungsschrauben oder ähnliche Befestigungsmittel erstrecken, mit denen der Schwingungsdämpfer an einem anderen Bauteil wie einem Karosserieteil angebracht wird. Der erfindungsgemäße Schwingungsdämpfer kann als Zusatzmasse oder Aufclipsteil angesehen werden, das ohne Kontakt zu einem die Leitung tragenden Bauteil auf die Leitung aufgesetzt wird.

Aufgabe der Erfindung ist es, einen Schwingungsdämpfer für zumindest eine Leitung bereitzustellen, der verbesserte Dämpfungseigenschaften aufweist sowie günstiger herzustellen ist.

Zur Lösung der Aufgabe ist ein Schwingungsdämpfer für zumindest eine Leitung, insbesondere in einem Fahrzeug, vorgesehen, mit zumindest einer Aufnahme, in der eine Leitung gehalten werden kann, und einem Rahmen, in dem die Aufnahme gehalten ist und der die Aufnahme in Umfangsrichtung umschließt, wobei der Rahmen flexibel ausgebildet ist und/oder flexible Stege vorgesehen sind, die die Aufnahme beabstandet vom Rahmen halten. Der Rahmen umschließt die Aufnahme in Umfangsrichtung, sodass bei Schwingungen der Rahmen mit festen Bauteilen, beispielsweise der Karosserie, in Anlage gerät. Um Schwingungen oder das Anschlagen an der Karosserie zu dämpfen, ist der Rahmen zum einen flexibel ausgebildet, sodass dieser sich bei einer Berührung verformen und somit Stöße abfedern kann. Zum anderen sind zwischen Rahmen und Aufnahme flexible Stege vorgesehen, die eine begrenzte Bewegung der Aufnahme gegenüber dem Rahmen ermöglichen. Diese Stege haben dadurch eine zusätzliche Dämpfungsfunktion. Die Aufnahme ist gewissermaßen vom Rahmen entkoppelt, sodass der Rahmen an die Karosserie anstoßen kann, aber Stöße und Schwingungen auf die Aufnahme reduziert werden.

Vorzugsweise verlaufen die Stege gekrümmt vom Rahmen zur Aufnahme, sodass diese bei einer Berührung des Rahmens mit der Karosserie federartig nachgeben können. Die Stege können beispielsweise bezüglich einer Hauptschwingungsrichtung bez. einer Symmetrieachse des Schwingungsdämpfers spiegelsymmetrische Krümmungen aufweisen, sodass durch das Zurückfedern keine weitere Querkraft auf die Leitung bzw. den Schwingungsdämpfer ausgeübt wird und in dieser Richtung die Dämpfungseigenschaften verbessert werden.

Vorzugsweise ist am Schwingungsdämpfer eine Einschuböffnung für die Leitung vorgesehen, die durch eine Unterbrechung des Rahmens und der Aufnahme gebildet ist. Dadurch kann der Schwingungsdämpfer auch nachträglich an einer Leitung montiert werden, indem die Leitung durch die Einschuböffnung in die Aufnahme eingeschoben wird.

Die Ränder der Unterbrechungen des Rahmens und der Aufnahme sind vorzugsweise durch flexible Stege miteinander verbunden, sodass diese Stege zusätzlich die Funktion einer Einführschräge bzw. Zentrierhilfe für die Leitung beim Einschieben der Leitung durch die Einschuböffnung haben.

Die flexiblen Stege an den Rändern der Unterbrechungen des Rahmens und der Aufnahme sind beispielsweise so gekrümmt, dass diese die Einschuböffnung verengen. Zum Einschieben der Leitung können die Stege flexibel nachgeben und anschließend die Einschuböffnung wieder so verengen, dass ein Herausrutschen der Leitung aus der Aufnahme verhindert werden kann.

In der Aufnahme können aber auch Fixiervorsprünge für die Leitung vorgesehen sein, um ein Herausrutschen der Leitung aus der Aufnahme zu verhindern. Diese Fixiervorsprünge können durch Rastelemente gebildet sein, an welchen die Leitung verrastet.

Am Schwingungsdämpfer können auch zumindest zwei Aufnahmen vorgesehen sein, wobei für jede Aufnahme eine separate Einschuböffnung vorgesehen ist und zwischen den Aufnahmen Stege vorgesehen sind, die die Aufnahmen beabstandet voneinander halten. Häufig werden mehrere Leitungen parallel verlegt, wobei ein Schwingungsdämpfer für mehrere Leitungen verwendet werden kann. Dieser kann zusätzlich die einzelnen Leitungen voneinander beabstandet halten, sodass die Leitungen sich nicht gegenseitig berühren oder gegeneinander schlagen können. Um dies sicherzustellen, sind die Stege zwischen den Aufnahmen vorzugsweise so ausgebildet, dass diese nicht oder nur geringfügig federn, sodass die Leitungen zuverlässig beabstandet voneinander gehalten werden. Die kann beispielsweise dadurch erfolgen, dass diese Stege nicht gekrümmt ausgebildet sind. Alle Aufnahmen können in einem gemeinsamen Rahmen angeordnet sein, der umlaufend um alle Aufnahmen angeordnet ist, sodass alle Aufnahmen und somit alle Leitungen durch den Rahmen vor einem Anstoßen an der Fahrzeugkarosserie geschützt sind.

Der Schwingungsdämpfer ist vorzugsweise aus einem flexiblen Kunststoff hergestellt, insbesondere aus einem thermoplastischen Elastomer. Insbesondere ist der Schwingungsdämpfer mit einem Einkomponenten-Spritzgussverfahren hergestellt, das heißt, der Schwingungsdämpfer ist aus einem einzigen Material hergestellt, sodass nur ein Spritzvorgang erforderlich ist.

Weitere Vorteile und Merkmale finden sich in der nachfolgenden Beschreibung in Verbindung mit den beigefügten Zeichnungen. In diesen zeigen:
- Figur 1 eine erste Ausführungsform eines erfindungsgemäßen Schwingungsdämpfers,
- Figur 2 den Schwingungsdämpfer aus Figur 1 mit einer Leitung,
- Figur 3 eine zweite Ausführungsform des erfindungsgemäßen Schwingungsdämpfers, und
- Figur 4 den Schwingungsdämpfer aus Figur 3 mit zwei eingelegten Leitungen.

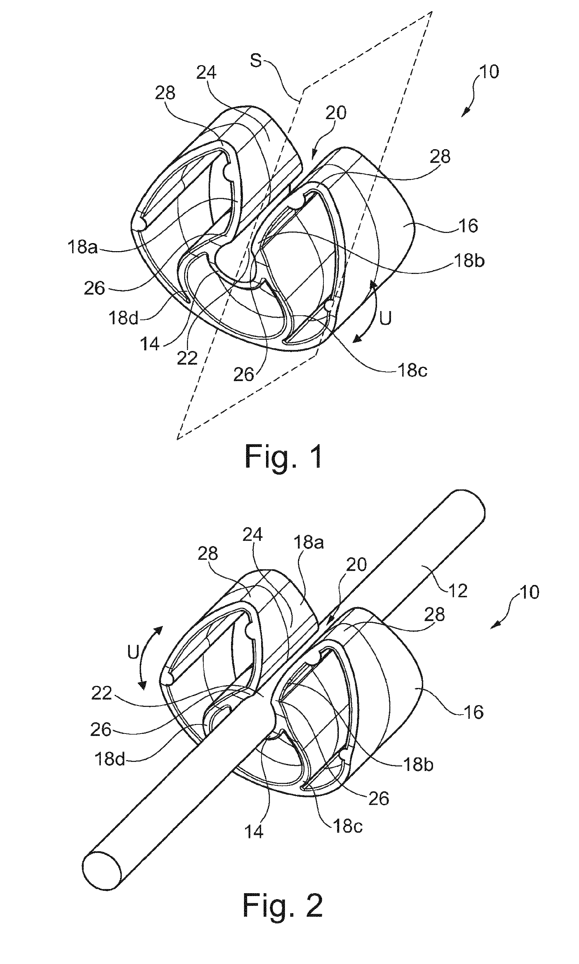

In den Figuren 1 und 2 ist ein Schwingungsdämpfer 10 für eine Leitung 12 (siehe Figur 2) gezeigt. Der Schwingungsdämpfer 10 hat die Funktion, ein Schwingen der Leitung 12 zu verhindern oder zu dämpfen bzw. ein Anschlagen der Leitung 12 an der Fahrzeugkarosserie zu verhindern, indem der Schwingungsdämpfer 10 bei einem Anschlagen an der Fahrzeugkarosserie Stöße auf die Leitung 12 verhindert bzw. dämpft.

Der Schwingungsdämpfer 10 hat eine Aufnahme 14, in die die Leitung 12 eingelegt und in dieser fixiert werden kann (siehe Figur 2). Des Weiteren weist der Schwingungsdämpfer 10 einen Rahmen 16 auf, der die Aufnahme 14 in einer Umfangsrichtung U umschließt. Zwischen Rahmen 16 und Aufnahme 14 sind mehrere Stege 18a, 18b, 18c, 18d vorgesehen, die die Position der Aufnahme 14 im Rahmen 16 festlegen und durch die die Aufnahme 14 beabstandet vom Rahmen 16 gehalten wird.

Der Schwingungsdämpfer 10 ist einstückig aus einem flexiblen Kunststoff hergestellt, beispielsweise aus einem thermoplastischen Elastomer (TPE), wobei der Schwingungsdämpfer 10 vorzugsweise in einem Einkomponenten-Spritzgussverfahren gespritzt ist.

Um die Leitung 12 in die Aufnahme 14 einschieben zu können, ist eine Einschuböffnung 20 vorgesehen, die durch Unterbrechungen 22, 24 im Rahmen 16 bzw. in der Aufnahme 14 gebildet ist. Die Ränder 26 bzw. 28 der Unterbrechungen 22, 24 sind in der hier gezeigten Ausführungsform durch zwei Stege 18a, 18b miteinander verbunden, sodass die Stege 18a, 18b eine Einführschräge für die Leitung 12 bilden.

Wie in den Figuren 1 und 2 zu sehen ist, verlaufen die Stege 18a, 18b, 18c, 18d gekrümmt von der Aufnahme 14 zum Rahmen 16, sodass diese elastisch federnd nachgeben können. Die Stege 18a, 18b, die die Einschuböffnung 20 begrenzen, sind jeweils konkav zur Einschuböffnung 20 hin gekrümmt, sodass diese die Einschuböffnung 20 verengen. Die Stege 18c, 18d sind ebenfalls bezüglich einer Symmetrieebene S spiegelsymmetrisch gekrümmt.

Die Leitung 12 kann durch die Einschuböffnung 20 in die Aufnahme 14 eingeschoben werden, wobei die Stege 18a, 18b flexibel nachgeben und so die Einschuböffnung 20 freigeben können. Ist die Leitung 12 in die Aufnahme 14 eingeschoben, federn die Stege 18a, 18b in die Ausgangsposition zurück, in der die Einschuböffnung 20 so weit verengt ist, dass die Leitung 12 nicht aus dieser herausrutschen kann, wodurch der Schwingungsdämpfer 10 sicher an der Leitung 12 fixiert ist.

Anstelle der flexiblen Stege 18a, 18b können aber auch andere Strukturen zur Fixierung der Leitung in der Aufnahme 14 vorgesehen sein, beispielsweise Fixiervorsprünge, insbesondere Rastelemente.

Durch die größere Masse des Schwingungsdämpfers 10 wird zum einen das Schwingungsverhalten der Leitung 12 verändert. Zum anderen gelangt, falls die Leitung 12 schwingt, zuerst der Schwingungsdämpfer 10 an einer Karosserie oder einem anderen Bauteil in Anlage und verhindert so ein Anschlagen der Leitung.

Da der Rahmen 16 flexibel ausgebildet ist, kann sich dieser beim Anschlagen an der Karosserie elastisch verformen und somit Stöße auf die Leitung 12 dämpfen bzw. verhindern. Darüber hinaus können sich die flexiblen Stege 18a, 18b, 18c, 18d flexibel verformen und so Stöße auf die Leitung 12 zusätzlich dämpfen. Die Aufnahme 14 ist gewissermaßen durch die Stege 18a, 18b, 18c, 18d vom Rahmen entkoppelt, sodass Stöße auf den Rahmen 16 nicht an die Aufnahme 14 und somit nicht an die Leitung 12 weitergegeben werden.

Wie insbesondere in Figur 2 zu sehen ist, umschließt der Schwingungsdämpfer 10 die Leitung 12 in Umfangsrichtung U fast vollständig, sodass unabhängig von der Schwingungsrichtung eine Dämpfung des Stoßes bzw. des Anschlagens an die Fahrzeugkarosserie erfolgt.

Da Schwingungen und Stöße auf die Leitung 12 reduziert werden, ist ein zuverlässiger Schutz der Leitung 12 gewährleistet. Da zudem der Schwingungsdämpfer 10 Stöße und Schwingungen flexibel abfedern bzw. dämpfen kann, ist die Geräuschentwicklung beim Betrieb des Fahrzeugs deutlich geringer.

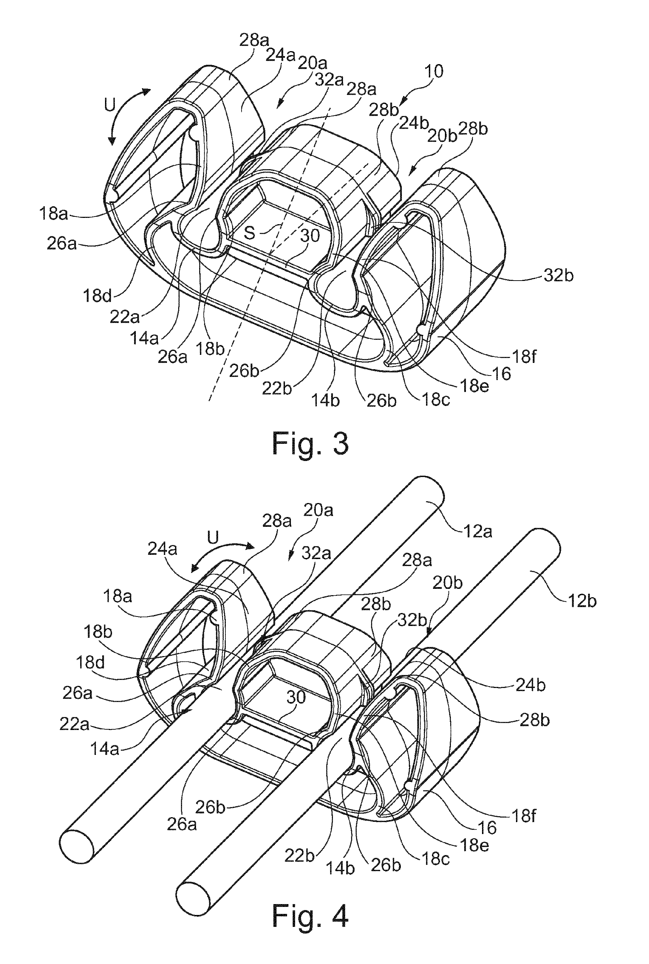

Eine zweite Ausführungsform eines erfindungsgemäßen Schwingungsdämpfers 10 ist in den Figuren 3 und 4 dargestellt. Dieser Schwingungsdämpfer 10 hat zwei Aufnahmen 14a, 14b, die jeweils separate Einschuböffnungen 20a, 20b aufweisen. Beide Aufnahmen 14a, 14b sind in einem gemeinsamen Rahmen 16 gehalten und durch einen Steg 30 beabstandet voneinander gehalten.

Dieser Steg 30 ist gerade ausgebildet, sodass dieser nicht oder nur geringfügig federnd nachgeben kann, wodurch die Leitungen 12a, 12b sicher beabstandet voneinander gehalten werden.

Der Aufbau des übrigen Schwingungsdämpfers 10 entspricht im Wesentlichen dem in den Figuren 1 und 2 gezeigten Schwingungsdämpfer 10, wobei in dieser Ausführungsform insgesamt sechs Stege 18a bis 18f vorgesehen sind. Jeweils zwei Stege 18a, 18b, 18e, 18f verbinden die Ränder 26a, 26b bzw. 28a, 28b der Unterbrechungen 22a, 22b, 24a, 24b miteinander und begrenzen somit die Einschuböffnungen 20a, 20b. Die übrigen beiden Stege 18c, 18d sind bezüglich einer Symmetrieebene achsensymmetrisch vorgebogen.

Die Anzahl und Positionierung sowie die Form der Stege kann aber auch beliebig an die Einbaubedingungen oder die gewünschten Dämpfungseigenschaften angepasst werden.

Zusätzlich sind an den Einschuböffnungen 20a, 20b Fixiervorsprünge 32a, 32b vorgesehen, die die Leitungen 12a, 12b zusätzlich in den Aufnahmen 14a, 14b fixieren können. Die Fixiervorsprünge 32a, 32b sind an den Stegen 18a, 18b, 18e, 18f gehalten, sodass diese zusammen mit den Stegen 18a, 18b, 18e, 18f zum Einschieben der Leitungen 12a, 12b flexibel nachgeben können.

Die Fixiervorsprünge 32a, 32b können aber auch Rastelemente aufweisen, die in sich flexibel nachgeben können und die Einschuböffnungen 20a, 20b freigeben können.

Da die Leitungen 12, 12a, 12b auch in dieser Ausführungsform annähernd vollständig in Umfangsrichtung U vom Rahmen 16 umschlossen sind, ist ein Anschlagen der Leitungen 12, 12a, 12b an einem fahrzeugfesten Gegenstand, beispielsweise der Fahrzeugkarosserie, zuverlässig verhindert.

Durch die Einschuböffnungen 20, 20a, 20b ist auch eine nachträgliche Montage des Schwingungsdämpfers 10 an bereits eingebauten Leitungen 12, 12a, 12b in einem Fahrzeug möglich.

Vorzugsweise ist der Rahmen 16 rund oder oval ausgebildet und weist keine Ecken oder Vorsprünge auf, sodass in Umfangsrichtung U eine gute Dämpfung beim Anstoßen an der Fahrzeugkarosserie gegeben ist und ein Hängenbleiben oder Verkanten an einem fahrzeugfesten Gegenstand ausgeschlossen ist.

## Patentansprüche

1. Schwingungsdämpfer (10) zur Anbringung an zumindest einer Leitung (12, 12a, 12b), insbesondere in einem Fahrzeug, mit zumindest einer Aufnahme (14, 14a, 14b), in der eine Leitung (12, 12a, 12b) gehalten werden kann, und einem Rahmen (16), in dem die Aufnahme (14, 14a, 14b) gehalten ist, der die Aufnahme (14, 14a, 14b) in Umfangsrichtung (U) umschließt und der bei Schwingungen in Anlage an einem anderen Bauteil gelangen kann, **dadurch gekennzeichnet, dass** der Rahmen (16) flexibel ausgebildet ist und/oder dass flexible Stege (18a, 18b, 18c, 18d, 18e, 18f) vorgesehen sind, die die Aufnahme (14, 14a, 14b) beabstandet vom Rahmen (16) halten.

2. Schwingungsdämpfer nach Anspruch 1, **dadurch gekennzeichnet, dass** die Stege (18a, 18b, 18c, 18d, 18e, 18f) gekrümmt vom Rahmen (16) zur Aufnahme (14, 14a, 14b) verlaufen.

3. Schwingungsdämpfer nach Anspruch 1 oder 2, **dadurch gekennzeichnet, dass** eine Einschuböffnung (20, 20a, 20b) für die Leitung (12, 12a, 12b) vorgesehen ist, die durch eine Unterbrechung (22) des Rahmens (16) und eine Unterbrechung (24, 24a, 24b) der Aufnahme (14, 14a, 14b) gebildet ist.

4. Schwingungsdämpfer nach Anspruch 3, **dadurch gekennzeichnet, dass** die Ränder (26, 28) der Unterbrechungen (22, 24, 24a, 24b) des Rahmens (16) und der Aufnahme (14, 14a, 14b) durch flexible Stege (18a, 18b, 18e, 18f) miteinander verbunden sind.

5. Schwingungsdämpfer nach Anspruch 4, **dadurch gekennzeichnet, dass** die flexiblen Stege (18a, 18b, 18e, 18f) an den Rändern (26, 28) der Unterbrechungen (22, 24, 24a, 24b) des Rahmens (16) und der Aufnahme (14, 14a, 14b) so gekrümmt sind, dass diese die Einschuböffnung (20, 20a, 20b) verengen.

6. Schwingungsdämpfer nach einem der vorhergehenden Ansprüche, **dadurch gekennzeichnet, dass** in der Aufnahme (14, 14a, 14b) Fixiervorsprünge, insbesondere Rastelemente, für die Leitung (12a, 12b) vorgesehen sind.

7. Schwingungsdämpfer nach einem der vorhergehenden Ansprüche, **dadurch gekennzeichnet, dass** zumindest zwei Aufnahmen (14a, 14b) vorgesehen sind, wobei für jede Leitung (12a, 12b) eine separate Einschuböffnung (20a, 20b) vorgesehen ist, und zwischen den Aufnahmen (14a, 14b) Stege (30) vorgesehen sind.

8. Schwingungsdämpfer nach einem der vorhergehenden Ansprüche, **dadurch gekennzeichnet, dass** der Schwingungsdämpfer (10), insbesondere mit einem Einkomponenten-Spritzgussverfahren, aus einem flexiblen Kunststoff, insbesondere aus TPE, hergestellt ist.
